# EUROPEAN PATENT APPLICATION

(11) **EP 0 811 858 A2**
(43) Date of publication of application: **10.12.1997**
(21) Application number: 97108990.9
(22) Date of filing: 04.06.1997
(51) Int. Cl.: G02B 5/128

(54) **Strip of flexible material possessing light retroreflection and refraction properties, and a method for its preparation**

(30) Priority: 06.06.1996 IT MI961154
(71) Applicant: Piombino, Valentina, 20145 Milan (IT)
(72) Inventor: Piombino, Valentina, 20145 Milan (IT)
(74) Representative: Frignoli, Luigi

(57) **Abstract**

The invention relates to a flexible sheet or web of polyolefin possessing light reflection and refraction properties. On at least one of its faces, the sheet has a light-reflecting surface on which light-transparent silica granules are fixed. The granules are fixed by a glue soluble in solvents volatile at ambient temperature, the glue possessing and preserving good elasticity after solvent evaporation.

## Description

This invention relates to a strip of flexible material possessing light retroreflection and refraction properties. The invention also relates to a method for preparing this strip.

For light reflection, resistant supports are used, one surface of which is treated with a light-reflecting coating. Light-transparent granules (for example silica, glass, or natural or synthetic corundum granules, beads or powder) are fixed to this surface by glue which heat-softens at a temperature generally of 65-70°C or higher.

In the known art, a layer of heat-softening glue or adhesive is firstly applied to the support surface. The transparent granules are distributed over this glue, maintained at its softening temperature, and are then covered with a film or sheet of transparent synthetic material which is pressed onto the granules in the direction of the support (by the known hot-melt method) to hence form a composite panel having the desired light retroreflection and refraction properties.

Because of the need to soften said glue at a fairly high temperature, the panels of known type are worked batch-wise, the supports used in them having to withstand the glue softening temperature. These supports must therefore have dimensional stability at such temperature (ie they must not deform by the action of the heat to which they are subjected) and thermal shock resistance. For this reason, metal or plastic laminate (PVC, ABS, PVDF, PMMA etc.) supports are generally used, either as such or in various combinations.

As the light reflecting and refracting materials to which the invention relates are extremely widely used and can extend from the formation of road signals to the formation of individual protection devices (such as overalls, masks, gloves, arm bands, abdominal belts, etc.) the known art consequently suffers from the serious drawbacks deriving from batch production (with resultant high costs) and the impossibility of using light, very thin, low-cost flexible supports.

The main object of the present invention is therefore to provide strips of very light, low-cost flexible material possessing elevated light reflection and refraction properties.

A further object is to provide a method enabling the aforesaid strips to be produced continuously, extremely rapidly and economically, by operating substantially at ambient temperature.

These and further objects are attained by a strip of flexible material possessing light retroreflection and refraction properties, comprising a support at least one surface of which is at least partially covered with a layer of material having light reflection properties, on which solid light-transparent granules are fixed, characterised in that said support consists of a thin flexible film of at least one polyolefin, said material layer comprising a crosslinked acrylic adhesive, a primer which adheres to polyolefins, a high-brilliance paint and coating pigment, zinc oxide and a coating substance of high light reflecting power, that surface of said material layer facing said granules being irregular because of the presence of roughness distributed over the surface, the thickness of said material layer being on the average less than the mean radius of said light-transparent granules.

Preferably said film is a polyethylene film having a thickness of between 5 and 100 microns, said primer which adheres to polyolefins is formed from polyolefin resins and ethylenevinylacetate polymers, said paint and coating pigment is titanium dioxide, and said coating substance of high light reflecting power is silver paint.

The method for preparing said strip is characterised in that at least a portion of at least one surface of a continuous web of said support is subjected to electric-arc treatment to render the surface irregular by the corona effect, on said surface there then being applied by an offset or flexographic printing system at ambient temperature a layer of a fluid mixture comprising acetone, self-crosslinking acrylic adhesive, primer which adheres to polyolefins, high-brilliance pigment for paints and coatings, zinc oxide, and a coating substance of high light reflecting power, a continuous layer of granules of light-transparent material being pneumatically, electrostatically or electromechanically distributed over said fluid mixture, the composite web obtained in this manner being passed into a forced-air ventilation system to cause evaporation of the volatile solvent and polymerization of the polymerizable components of the mixture.

Preferably said fluid mixture comprises about 50% of said self-crosslinking acrylic adhesive, 38.5% of said adhering primer, 5% of acetone, 5% of said pigment, 0.5% of zinc oxide and 1% of said coating substance of high reflecting power, said percentages being by weight and being able to vary by plus or minus 10% from the aforesaid percentages.

The present invention will be more apparent from the description of one embodiment thereof given hereinafter by way of non-limiting example with reference to the accompanying drawing, in which:
Figure 1 is the scheme of a plant for producing the reflecting and refracting strip according to the invention, of which
Figure 2 shows schematically a portion to a highly enlarged scale, without respecting its real dimensions.

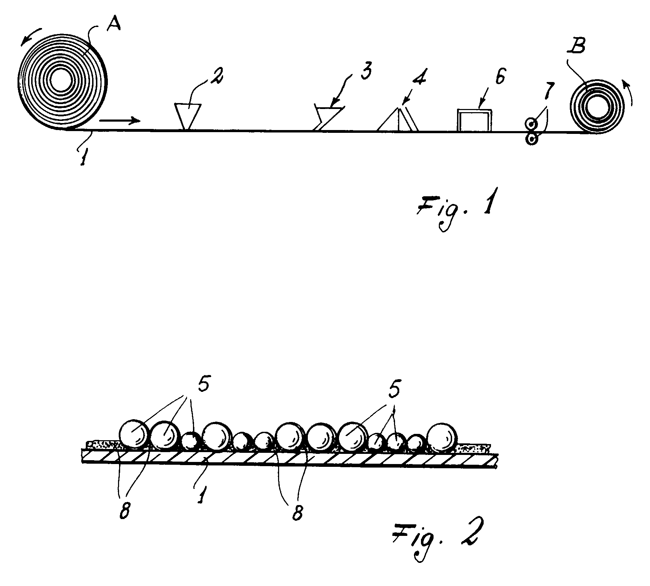

Reference will firstly be made to Figure 1, which schematically shows a reel A on which there is wound a web 1 of thin flexible material, which unwinds from said reel to be finally rewound (after moving along conveyor rollers, not shown for simplicity) on a collection reel B.

The web 1 can consist of a thin flexible film of plastic material (for example olefin-based of thickness between 5 and 100 microns), but is preferably a polyethylene web.

To give a specific example, the film or web 1 is preferably formed of linear polyethylene (PELD) or high-density polyethylene (PEHD) or their mixtures, in a thickness of 20-50 microns, possibly coloured red (as is often required by European regulations) or black (as required by American regulations, such as those of the United States). This web is fed continuously at a minimum rate of 40 metres per minute.

In the example described herein it is assumed that only one of the web surfaces (the upper surface on the drawing) is to be treated in the manner to be described, but it is apparent that the same treatment can also be effected on the other web surface.

The web firstly passes to a station 2 where its surface is subjected to an electric arc which, by the well-known corona effect, renders this surface irregular or rough, with microscopic recesses and cavities a purpose of which is to ensure perfect attachment to the film of the layer of material to be applied to it, as described hereinafter. This treatment can evidently be already effected upstream, ie before winding the web to form the reel A.

The film 1 then passes to a station 3 where, by a common offset or flexographic printing system, a layer of a covering fluid mixture of high brilliance and high light reflecting power is cold-spread.

This mixture is prepared separately by carefully mixing together the self-crosslinking acrylic adhesive, a primer which adheres to polyolefins, a high-brilliance paint and coating pigment, zinc oxide, coating substance of high light-reflecting power and acetone.

The self-crosslinking acrylic adhesive is marketed in solution (usually in aliphatic solvents and esters), and has high light and yellowing resistance, excellent heat resistance and excellent dimensional stability.

It has been found preferable to use as the primer which adheres to polyolefins a product based on polyolefin resins and ethylene-vinylacetate copolymers, which can dry in air by solvent evaporation.

It has been found advantageous to use titanium dioxide as pigment, this ensuring a pure white tone, a high refraction index, high brilliance, good brightening and covering power, and easy dispersibility, it being widely applicable to paints and coatings.

The zinc oxide used is preferably of ultrafine micronized type, easily dispersible even in mixtures of very low viscosity, to ensure optimum crosslinking and high thermal aging resistance of the polymerizable substances to which it is added.

For the coating substance of high light-reflecting power it has been found advantageous to use common silver paints.

The aforesaid fluid mixture is preferably prepared by mixing, for example for 5 minutes, 2000 g of self-crosslinking acrylic adhesive with 40 g of silver paint and 1400 g of adhering primer based on polyolefin resins and ethylene-vinylacetate copolymers, which can dry in air by solvent evaporation. Separately a mixture is prepared, mixing for 5 minutes, of 200 g of titanium dioxide, 20 g of zinc oxide and a further 140 g of said adhering primer. The two said mixtures are then mixed together, 20 g of acetone are added and mixing is carried out for 10 minutes. A further quantity of adhering primer can then be added to and mixed with the final mixture obtained, until the desired viscosity is achieved.

In general, the fluid mixture spread over the film comprises about 50% of self-crosslinking acrylic adhesive, 38.5% of adhering primer, 5% of acetone, 5% of pigment, 0.5% of zinc oxide and 1% of light-reflecting coating substance, the percentage being by weight and being able to vary by plus or minus 10% from the aforesaid percentages.

After the desired fluid mixture layer (for example of 13-14 micron thickness) has been deposited (at ambient temperature) on the film 1 in the station 3, the web passes to a station 4 in which over this fluid mixture there is distributed pneumatically (for example by a Venturi ejector) or electromechanically or electrostatically a continuous layer of granules or beads 5 of light-transparent material (for example Crown glass microbeads of mean diameter about 20 microns, or natural or synthetic corundum granules, or powdered silica) which partially penetrate into the fluid mixture layer spread over the support film.

The granules can have an average size of between 10 and 80 microns, preferably less than 25 microns, their mean radius being equal to or greater than the thickness of the fluid mixture spread over the film.

After the powdered silica has been sprayed on the web, the web passes to a station 6 (acting as a drying and polymerizing oven) where forced ventilation is provided at ambient temperature to rapidly evaporate the solvent and effect said polymerization.

The solidified adhesive securely retains the transparent granules bonded to the support film, and the web obtained in this manner can be wound on the collection reel B, possibly after being passed between two rollers 7 to set its thickness, if the transparent material granules are not of constant size.

Figure 2 shows to an enlarged but disproportionate scale a web portion in which granules or beads 5 of optically transparent material of different dimensions have been fixed on a polyethylene film 1 by a material layer 8.

After being formed but before being wound on the collection reel B, the web can be subjected to further treatment by which the granules are covered with a layer of light-transparent impermeabilizing coating.

It will be apparent that with the described method, polyolefin articles can be made light-retroreflecting and refracting by being worked at high speed, with low cost and high functional and mechanical characteristics.

## Claims

1. A strip of flexible material possessing light retroreflection and refraction properties, comprising a support at least one surface of which is at least partially covered with a layer of material having light reflection properties, on which solid light-transparent granules are fixed, characterised in that said support consists of a thin flexible film of at least one polyolefin, said material layer comprising a crosslinked acrylic adhesive, a primer which adheres to polyolefins, a high-brilliance paint and coating pigment, zinc oxide and a coating substance of high light reflecting power, that surface of said material layer facing said granules being irregular because of the presence of roughness distributed over the surface, the thickness of said material layer being on the average less than the mean radius of said light-transparent granules.

2. A strip as claimed in claim 1, characterised in that said film is a polyethylene film having a thickness of between 5 and 100 microns.

3. A strip as claimed in claims 1 and 2, characterised in that said primer which adheres to polyolefins is formed from polyolefin resins and ethylene-vinylacetate polymers.

4. A strip as claimed in claims 1 to 3, characterised in that said paint and coating pigment is titanium dioxide.

5. A strip as claimed in claims 1 to 4, characterised in that said coating substance of high light reflecting power is silver paint.

6. A method for preparing a strip claimed in claims 1 to 5, characterised in that at least a portion of at least one surface of a continuous web of said support is subjected to electric-arc treatment to render the surface irregular by the corona effect, on said surface there then being applied by an offset or flexographic printing system at ambient temperature a layer of a fluid mixture comprising acetone, self-crosslinking acrylic adhesive, primer which adheres to polyolefins, high-brilliance pigment for paints and coatings, zinc oxide and a coating substance of high light reflecting power, a continuous layer of granules of light-transparent material being pneumatically, electrostatically or electromechanically distributed over said fluid mixture, the composite web obtained in this manner being passed into a forced-air ventilation system to cause evaporation of the volatile solvent and polymerization of the polymerizable components of the mixture.

7. A method as claimed in claim 6, characterised in that said fluid mixture comprises about 50% of said self-crosslinking acrylic adhesive, 38.5% of said adhering primer, 5% of acetone, 5% of said pigment, 0.5% of zinc oxide and 1% of said coating substance of high reflecting power, the percentages being by weight and being able to vary by plus or minus 10% from the aforesaid percentages.

8. A method as claimed in claims 6 and 7, characterised in that said fluid mixture is prepared by mixing together on the one hand a part of said acrylic adhesive, said coating substance of high reflecting power and most of said adhering primer, and separately mixing together on the other hand said pigment, the zinc oxide and a lesser part of said adhering primer, then mixing together said two mixes with the addition of acetone, and finally adding and mixing adhering primer until the desired viscosity for applying the mixture to the support web is attained.

9. A method as claimed in claims 6 to 8, characterised in that said strip is calendered to cause it to assume a substantially uniform thickness.

10. A method as claimed in claims 2 to 9, characterised in that a layer of transparent impermeabilizing coating is applied to said web to cover the free surface of said granules.
